# EUROPEAN PATENT SPECIFICATION

(11) **EP 0 514 318 B1**
(45) Date of publication and mention of the grant of the patent: **09.04.1997**
(21) Application number: 92630049.2
(22) Date of filing: 07.05.1992
(51) Int. Cl.: H01H 35/10

(54) **Positioning and limiting structure for an electric motor centrifugal actuator**
Lageeinstell- und Begrenzungsvorrichtung für ein zentrifugales Betätigungselement eines Elektromotors
Structure d'ajustage et de limitation d'un actionneur centrifuge pour moteur électrique

(30) Priority: 16.05.1991 US 701523
(43) Date of publication of application: 19.11.1992
(73) Proprietor: EMERSON ELECTRIC CO., St. Louis Missouri 63136 (US)
(72) Inventor: Ottersbach, Thomas Vincent, Normandy, Missouri 63121 (US)
(74) Representative: Weydert, Robert

(56) References cited:
- US-A- 3 609 421
- US-A- 4 661 732

## Description

The present invention relates to a centrifugal actuator assembly and more particularly to a centrifugal actuator assembly for actuating a starting switch for energization and deenergization of the starting winding of an electric motor, including an improved arrangement for positively positioning the actuator assembly for moveable operation relative first and second preselected positions and for limiting movement beyond such first and second positions.

It is well known in the electric motor art to actuate a switch for selective energization of stator windings used to generate required suitable forces for rotating the rotor assembly associated with the stator for both "start" and "run" conditions. The switch to be actuated conventionally is operated by a centrifugal actuator assembly mounted on and rotatable with the rotor shaft of an electric motor, the inwardly-outwardly moving levers of the centrifugal actuator assembly being responsive to the speed of the rotor shaft upon which the centrifugal actuator is mounted. Many of these centrifugal actuator assemblies of the prior art have included spring biased, weighted levers with the weights being capable of moving outwardly by centrifugal force acting against the spring biasing to effect axial shifting movement of a portion of the centrifugal actuator from a first position to a second position with respect to the rotor shaft. This movement is linked to a switch leading to motor windings effecting "start" and ""run" conditions of the motor. US-A-3,609,421 discloses a centrifugal starting switch actuator for AC electric motors mounted on a motor shaft for rotational movement thereon between two angularly spaced stops and particularly a means forming a driving connection between a motor drive shaft and the actuator capable of absorbing or precluding the transmission of torque pulses from the motor shaft to the actuator. In US-A-4,661,732 (on which the two-part form of claim 1 is based), it was broadly recognized to provide limiting structure to interrupt and prevent further outward movement of the spring biased switch actuating levers of a centrifugal actuator assembly in the event of improper actuating operations, the interrupting arrangement provided including lever camming surfaces cooperatively positioned with respect to a stop ledge to engage the levers in further outward movement to ensure alignment and snug nesting of the levers with the stop ledge in the event of improper actuating operation of the centrifugal actuator assembly.

The present invention, recognizing the advantages of such a safety stop ledge and camming surface arrangement in centrifugal actuator assemblies, further recognizes that such past arrangements have served to accommodate and limit improper actuator operations at only one actuator position. In addition, the present invention further recognizes that past centrifugal actuator arrangements have often resulted in operating problems, and have been involved in maintaining consistent engagement between a switch plunger and the centrifugal actuator associated therewith. Recognizing these past problems, the present invention provides an improved limiting arrangement which not only ensures alignment and snug nesting of the centrifugal actuator levers at both position of the moving levers but also ensures a positive and proper location of the actuating levers to maintain a consistent preselected engagement between actuator and associated switch plunger.

The present invention not only recognizes these past problems in the art, but resolves the same with an efficient straightforward and economical apparatus which can be readily manufactured with a minimum of parts and assembled without sacrifice of a number of known structural features of past centrifugal actuators.

Various other features of the present invention will become obvious to one skilled in the art upon reading the disclosure set forth herein.

More particularly the present invention provides an improved centrifugal actuator assembly adapted to be mounted on a rotatable shaft comprising: actuating lever means movably disposed relative the longitudinal axis of the shaft responsive to the rotational speed of the actuator assembly on the shaft for actuating movement of the lever means between first and second spaced positions relative the longitudinal axis of the shaft upon upon acceleration and deceleration of the actuator assembly; means for biasing the lever means to the first position; guide means mounted on the shaft including a carriage member being movable axially relative to the longitudinal axis of the shaft, the guide means and said carriage member cooperating with the lever means to guide the movably disposed lever means in a preselected guide path between the first and second positions during normal operations of acceleration and deceleration; first stop means on the guide means and engageable against the lever means to limit movement of the lever means in one direction, beyond the first position; characterized by second stop means on the guide means engageable against the carriage member to limit movement of the lever means in the other direction beyond the second position.

It is to be understood that various changes can be made by one skilled in the art in one or more of the several parts of the inventive centrifugal actuator assembly without departing from the scope of the present invention, as defined by the claims.

Referring to the drawings which disclose one advantageous embodiment of the present invention in views similar to those of Figures 1-4, 7 and 8 of aforementioned US-A-4,661,732 and which incorporates the novel features of the present invention along with an additional perspective view of a portion of the carriage or slider and the guide therefore:
Figure 1 is a partially broken away, side elevational view of the inventive switch actuator assembly mounted on a rotor shaft for rotation therewith, the actuating levers being shown in a spring biased inward or first position with a portion of the annular ring of the carriage or slider partially broken away to disclose one of the two stop pairs on the shaft mounted guide sleeve in nested engagement with the recessed annular ring or collar of the carriage;
Figure 2 is a side elevational view of the apparatus of Figure 1, the actuating levers being shown in a centrifugally moved outward or second position, this Figure 2 disclosing the nesting stop pair on the guide sleeve;
Figure 3 is an end view of the apparatus as shown in Figure 1, taken in a plane through line 3-3 in the direction of the arrows as shown in Figure 1;
Figure 4 is an end view of the apparatus as shown in Figure 2 taken in a plane through line 4-4 in the direction of the arrows as shown with this line;
Figure 5 is an enlarged, partially broken away side elevational view of the inventive actuator assembly, showing details of the actuating levers nesting between the other pair of two stop pairs and also showing ramp indentations when the levers depart from normal pivot nesting corners;
Figure 6 is an exploded side view of the several parts of the inventive centrifugal actuator assembly; and,
Figure 7 is a perspective view of the annular ring portion of the carriage and a portion of the guide sleeve, disclosing the stop pair on the guide sleeve in alignment with the recesses in the annular ring or collar of the carriage.

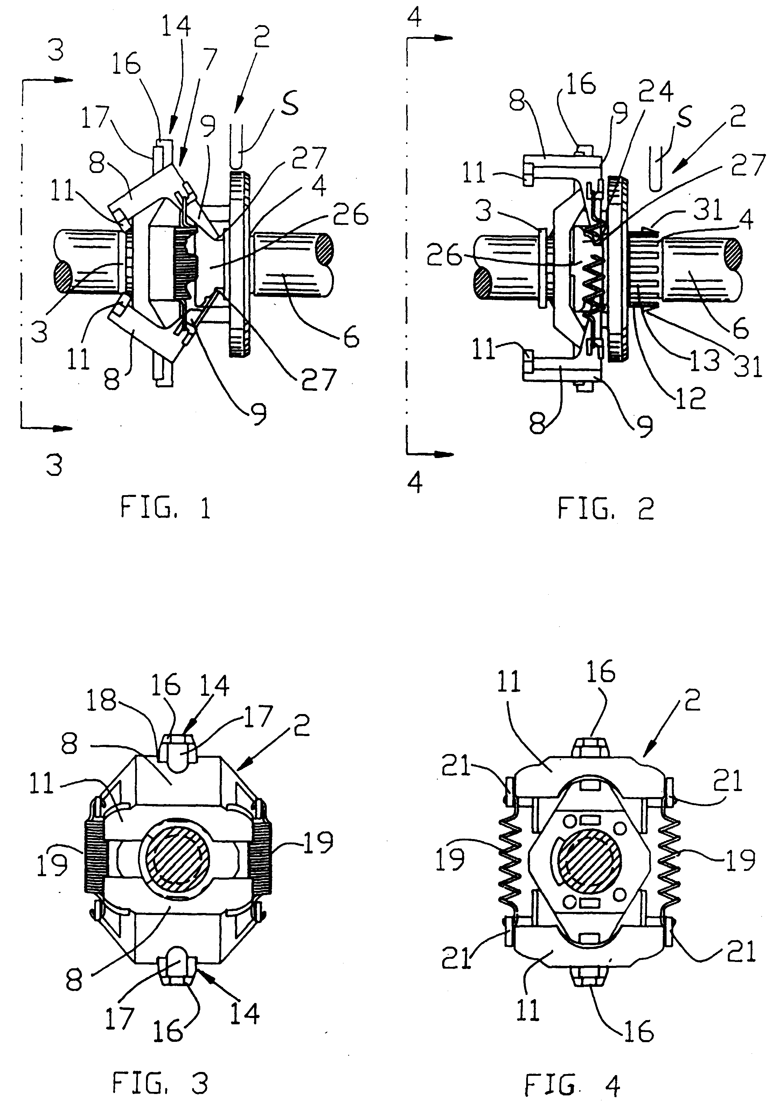

Referring to Figures 1-3 of the drawings, the inventive centrifugal actuator assembly 2 is shown as fixedly mounted between fixed stop collar 3 and groove 4 in the rotor shaft 6 of an electric motor (not shown) for rotation with shaft 6. It is to be understood that actuator assembly 2 can be linked to a suitable starting switch (also not shown) for energizing and deenergizing the starting windings of the electric motor.

Actuator assembly 2 includes a pair of similar actuating levers 7 positioned in mirror-image relation about rotor shaft 6. Each actuating lever 7 is of substantially L-shaped cross-section to include two leg portions, namely outwardly moveable or free leg portion 8 and pivotal or inner leg portion 9. A weighted element 11 is integral with and projects normal from the outer edge of free leg portion 8 and each leg portion is approximately recessed along the center of their respective free ends for shaft clearance purposes.

A suitable guide means for actuating levers 7 in the form of a sleeve 12 fixedly mounted to rotor shaft 6 between stop collar 3 and groove 4 includes a split end 13 with the extremities adapted to fit into groove 4 and a pair of lever guiding track members 14 extending in opposed cantilevered relationship from the opposite end thereof so as to be substantially normal to the longitudinal, rotating axis of rotor shaft 6. Each track member 14 has a stop ledge or lip portion 16 at its extremity which extend normal therefrom to provide one of two pair of stops and is further provided with a longitudinally extending guide rib 17. These track members 14 are of preselected length, size and shape to extend through an aperture 18 disposed in levers 7 along the joined leg portions 8, 9 (Figure 3). These apertures 18 conform with the cross-sectional contour of track members 14 to permit passage of these track members 14 therethrough when the leg portions 8, 9 are disposed at an angle to the longitudinal axis of the shaft with pivotal or inner leg portions 9 in their normal, biased pivot position, as will be described more fully hereinafter. To bias the actuating levers 7 so that pivotal leg portions 9 are maintained in pivot position, a pair of coil springs 19 are disposed in spaced relation on opposite sides of shaft 6. The ends of these coil springs are connected to hooks 21 extending from leg portions 9.

To enhance the pivotal movement of actuating levers 7, a carriage or slider 22 is movably keyed to sleeve 12 by a pair of longitudinally extending ribs 20 projecting normally from opposite sides of sleeve 12 to engage in longitudinally extending recesses 25 in carriage or slider 22 for longitudinal slidable movement thereon and thus movement axially of rotor shaft 6. Carriage or slider 22 has an annular ring 23 at one end thereof extending normal to shaft 6 with shoulder means in the form of a collar 24 having a pair of opposed side flanks 26 extending normally from annular ring 23. These side flanks 26 serve to provide pivot corners 27 for the free edges of pivotal or inner leg portions 9.

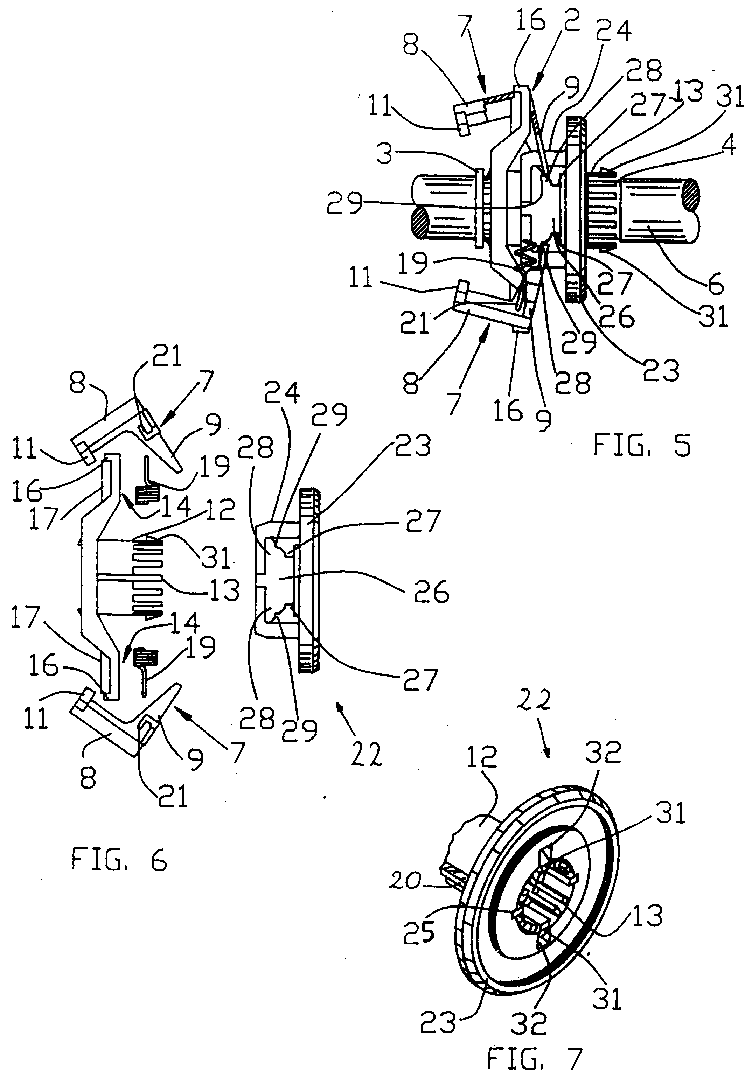

As can be seen in Figures 1 and 2 and more particularly in Figures 5 and 6, each of side flanks 26 on collar 24 of slider 22 is provided with camming means in the form of a pair of opposed inclined ramps 28 and each ramp 28 is, in turn, provided with an indentation 29. These ramp indentations 29 are so positioned or disposed relative aforedescribed stop ledges 16 on cantilevered track members 14 as to assure drop off into indentations 29 of the pivot ends of leg portions 9 in the event of improper actuator operation and concomitant departure to ramps 28 of the pivot ends of spring biased leg portions 9 from their normal pivot corners 27, the leg portions 9 being oriented to snugly engage between the indentations 29 and the stop ledges 16 to thus interrupt and prevent further outward movement of the actuator levers 7.

In addition to the above described one of two pairs of stop ledges 16 at the extremities of lever guiding track members 14 and in accordance with the present invention, another spaced second pair of stop ledges 31 are provided on sleeve 12 to extend normally from the outer peripheral surface of sleeve 12 adjacent the splined extremity of sleeve 12. Advantageously, the pair of stop ledges 31 are each integral with and form a part of one of two opposed splines which are selectively of larger breadth than the other sleeve extremity splines therebetween to provide the desired strength to accommodate for those forces produced by coil springs 19 when carriage or slider 22 is returned to start position upon rotor shaft 6 deceleration. It is to be noted that it also has been determined advantageous to provide recesses 32 extending through a portion of the thickness of annular ring 23 of carriage or slider 22 to accommodate these stop ledges 31 therein in an aligning and space saving manner. These pair of ledges 31 and spaced pair of ledges 16 serve to limit movement of carriage or slider 22 between first and second preselected positions, ensuring a preselective positioning of the centrifugal actuator assembly at all times relative the switch to be actuated.

During normal actuator operation, the pair of ledges or stops 31 engage in recesses 32 of annular ring 23 of carriage 22, positioning carriage or slider 22 in a first position generally corresponding to the position shown in Figure 1 with the switch plunger "S" in the "start winding" position. As rotor shaft 6 accelerates the "start winding" switch plunger "S" is disengaged with levers 7 pivoting about pivot corner 27 to the outward second or "run position" shown in Figure 2. Should levers 7 have any tendency to continue outward movement due to acceleration, inner tips of levers 7 enter indentations 29 with the levers 7 rotating to engage against the pair of stop ledges 16 limiting movement and preventing disassembly of the actuator assembly at the second position. When the motor stops levers 7 are spring forced to return to the first, "start winding" position, by coil springs 19 with the tapered end of plunger "S" engaging the tapered camming surface adjacent the periphery of ring 23 to return to "start" position along the properly positioned ring 23, the pair of stop ledges 31 engaging in recesses 32 of annular ring 23 of carriage 22 ensuring such proper positioning in the first "start winding" position and preventing disassembly of the actuator assembly beyond the first position.

With this straightforward, economical and efficient stop arrangement at both first and second positions, further positioning and limiting is ensured.

## Claims

1. A centrifugal actuator assembly (2) adapted to be mounted on a rotatable shaft (6) comprising:
actuating lever means (7) movably disposed relative to the longitudinal axis of said shaft (6) and responsive to the rotational speed of said actuator assembly (2) on said shaft (6) for actuating movement of said lever means (7) between first and second spaced positions relative to the longitudinal axis of said shaft (6) upon acceleration and deceleration of said actuator assembly (2);
means for biasing (19) said lever means (7) to said first position;
guide means (12) mounted on said shaft (8) and including a carriage member (22), said carriage member (22) being moveable axially relative to said longitudinal axis of said shaft (6), said guide means (12) and said carriage member (22) cooperating with said lever means (7) to guide said movably disposed lever means (7) in a preselected guide path between said first and said second positions during normal operations of acceleration and deceleration; and
first stop means (16) positioned on said guide means (12) and engageable against said lever means (7) to limit movement of said lever means (7) in one direction, beyond said first position,
characterized by second stop means (31) on said guide means (12) and engageable against said carriage member (22) to limit movement of said lever means (7) in the other direction beyond said second position.

2. The centrifugal actuator assembly (2) according to claim 1, characterized in that said actuating lever means (7) includes a pair of actuating levers (7) disposed on opposite sides of said longitudinal axis of said shaft (6).

3. The centrifugal actuator assembly (2) according to claim 1, characterized in that said guide means (12) includes a sleeve (12) fixedly mounted to said rotatable shaft (6) for rotation therewith, said sleeve (12) having at least one guide track member (14) extending in cantilever fashion from one end thereof substantially normal to the longitudinal axis of said shaft (6); said first and second stop means (16, 31) being in the form of spaced stop ledges (16, 31) one of which (16) projects substantially normal from the cantilevered extremity of said track member (14) to directly engage said movably disposed actuating lever means (7) to limit movement of said lever means (7) in one direction and the other of which spaced stop ledges (31) projects substantially normal from the other end of said sleeve (12) to directly engage against said carriage member (22) cooperable with said lever means (7) to limit movement of said lever means (7) in the other direction.

4. The centrifugal actuator assembly (2) according to claim 3, characterized in that said carriage member (22) has a recess (32) therein to nestingly receive and engage against said other of said spaced stop ledges (31).

5. An electric motor having a starting winding, a starting switch for energizing and deenergizing the starting winding, a rotor shaft (6), and a centrifugal actuator assembly (2) according to any one of claims 1 to 4 for actuation of said starting switch.

## Patentansprüche

1. Zentrifugal-betätigungsvorrichtung (2), welche auf einer drehbaren Welle (6) zu montieren ist, mit:
einer Betätigungshebeleinrichtung (7), welche beweglich angeordnet ist in bezug auf die Längsachse der Welle (6) und auf die Drehgeschwindigkeit der Betätigungsvorrichtung (2) auf der Welle (6) anspricht zur Betätigung der Bewegung der Hebeleinrichtung (7) zwischen ersten und zweiten beabstandeten Stellungen in bezug auf die Längsachse der Welle (6) bei Beschleunigung und Verzögerung der Betätigungsvorrichtung (2);
einer Einrichtung (19) um die Hebeleinrichtung (7) in Richtung zu der ersten Stellung zu drücken;
einer Führungseinrichtung (12), welche auf der Welle (8) montiert ist und ein Schlittenglied (22) aufweist, wobei das Schlittenglied (22) axial in bezug auf die Längsachse der Welle (6) beweglich ist, und wobei die Führungseinrichtung (12) und das Schlittenglied (22) mit der Hebeleinrichtung (7) zusammenwirken zum Führen der beweglich angeordneten Hebeleinrichtung (7) längs einem vorgewählten Führungsweg zwischen der ersten und der zweiten Stellung während normalem Beschleunigungs- und Verzögerungsbetrieb; und
einem ersten Anschlagmittel (16), das auf der Führungseinrichtung (12) positioniert ist und mit dem die Hebeleinrichtung (7) in Berührung bringbar ist zum Begrenzen der Bewegung der Hebeleinrichtung (7) in einer Richtung über die erste Stellung hinaus,
gekennzeichnet durch ein zweites Anschlagmittel (31) auf der Führungseinrichtung (12) und mit dem das Schlittenglied (22) in Berührung bringbar ist zum Begrenzen der Bewegung der Hebeleinrichtung (7) in der anderen Richtung über die zweite Stellung hinaus.

2. Zentrifugal-betätigungsvorrichtung (2) nach Anspruch 1, dadurch gekennzeichnet, dass die Betätigungshebeleinrichtung (7) zwei Betätigungshebel (7) aufweist, welche auf gegenüberliegenden Seiten der Längsachse der Welle (6) liegen.

3. Zentrifugal-betätigungsvorrichtung (2) nach Anspruch 1, dadurch gekennzeichnet, dass die Führungseinrichtung (12) eine Hülse (12) aufweist, die auf der drehbaren Welle (6) zur Rotation mit derselben fest montiert ist, wobei die Hülse (12) wenigstens ein Führungsbahnglied (14) aufweist, das sich kragarmförmig von einem Ende der Hülse im wesentlichen senkrecht zur Längsachse der Welle (6) erstreckt; wobei das erste und das zweite Anschlagmittel (16, 31) beabstandete Anschlagvorsprünge (16, 31) aufweisen, wobei einer (16) dieser Vorsprünge sich im wesentlichen senkrecht vom freitragenden Ende des Führungsbahngliedes (14) erstreckt zur unmittelbaren Anlage an der beweglich angeordneten Betätigungshebeleinrichtung (7) zum Begrenzen der Bewegung der Hebeleinrichtung (7) in einer Richtung, und der andere (31) der beabstandeten Anschlagvorsprünge sich im wesentlichen senkrecht vom anderen Ende der Hülse (12) erstreckt zur unmittelbaren Anlage am Schlittenglied (22), das mit der Hebeleinrichtung (7) zusammenwirkt zum Begrenzen der Bewegung der Hebeleinrichtung (7) in der anderen Richtung.

4. Zentrifugal-betätigungsvorrichtung (2) nach Anspruch 3, dadurch gekennzeichnet, dass das Schlittenglied (22) eine Aussparung (32) aufweist zur Aufnahme und Anlage gegen den anderen (31) der beabstandeten Anschlagvorsprünge.

5. Elektromotor mit einer Startwindung, einem Startschalter zur Erregung und Aberregung der Startwindung, einer Motorwelle (6) und einer Zentrifugalbetätigungseinrichtung (2) nach einem der Ansprüche 1 bis 4 zur Betätigung des Startschalters.

## Revendications

1. Ensemble d'actionnement centrifuge (2) conçu en vue d'être monté sur un arbre rotatif (6) comportant:
un moyen de levier d'actionnement (7) disposé de façon mobile par rapport à l'axe longitudinal de l'arbre et fonctionnant en réponse à la vitesse de rotation de l'ensemble d'actionnement (2) sur l'arbre (6) pour actionner le mouvement de ce moyen de levier (7) entre une première et une seconde position espacées par rapport à l'axe longitudinal de l'arbre (6) en cas d'accélération et de décélération de l'ensemble d'actionnement (2);
un moyen (19) pour pousser le moyen de levier (7) vers sa première position;
un moyen de guidage (12) monté sur l'arbre (8) et ayant un élément de chariot (22), cet élément de chariot (22) étant mobile axialement par rapport à l'axe longitudinal de l'arbre (6), ce moyen de guidage (12) et cet élément de chariot (22) coopérant avec le moyen de levier (7) en vue de guider le moyen de levier (7) disposé de façon mobile, le long d'un trajet de guidage préselectionné entre la première et la seconde position en fonctionnement normal d'accélération et de décélération; et
un premier moyen d'arrêt (16) positionné sur ledit moyen de guidage (12) et engageable avec le moyen de levier (7) pour limiter le mouvement du moyen de levier (7) dans une direction au-delà de la première position,
caractérisé par un second moyen d'arrêt (31) sur le moyen de guidage (12) et engageable avec ledit élément de chariot (22) en vue de limiter le mouvement du moyen de levier (7) dans l'autre direction au-delà de la seconde position.

2. Ensemble d'actionnement centrifuge (2) selon la revendication 1, caractérisé en ce que le moyen de levier d'actionnement (7) comporte une paire de leviers d'actionnement (7) disposés sur les côtés opposés de l'axe longitudinal de l'arbre (6).

3. Ensemble d'actionnement centrifuge (2) selon la revendication 1, caractérisé en ce que le moyen de guidage (12) comporte un manchon (12) monté rigidement sur l'arbre rotatif (6) pour rotation avec celui-ci, le manchon (12) ayant au moins un moyen formant glissière de guidage (14) s'étendant en porte-à-faux à partir d'une extrémité du manchon en directon sensiblement perpendiculaire à l'axe longitudinal de l'arbre (6); le premier et le second moyen d'arrêt (16, 31) étant conçus en forme de saillies d'arrêt espacées (16, 31) dont l'une (16) s'étend essentiellement perpendiculairement de l'extrémité en porte-à-faux du moyen formant glissière (14) pour engager directement le moyen de levier d'actionnement (7) disposé de façon mobile, pour limiter le mouvement de ce moyen de levier (7) dans une direction et l'autre (31) de ces saillies d'arrêt espacées s'étendant essentiellement perpendiculairement de l'autre extrémité du manchon (12) pour engager directement l'élément de chariot (22) coopérant avec ledit moyen de levier (7) pour limiter le mouvement de ce moyen de levier (7) dans l'autre direction.

4. Ensemble d'actionnement centrifuge (2) selon la revendication 3, caractérisé en ce que ledit élément de chariot (22) est pourvu d'une cavité (32) en vue de recevoir et d'engager l'autre (31) des saillies d'arrêt espacées.

5. Motor électrique ayant un enroulement de démarrage, un commutateur de démarrage pour la mise sous tension et la mise hors tension de l'enroulement de démarrage, un arbre de rotor (6), et un ensemble d'actionnement centrifuge (2) selon l'une quelconque des revendications 1 à 4 pour actionner le commutateur de démarrage.
